# EUROPÄISCHE PATENTSCHRIFT

(11) **EP 2 604 167 B1**
(45) Veröffentlichungstag und Bekanntmachung des Hinweises auf die Patenterteilung: **12.02.2020**
(21) Anmeldenummer: 12195220.4
(22) Anmeldetag: 03.12.2012
(51) Int. Cl.: G01F 1/06, A47L 15/42, D06F 39/08, G01F 15/14, G01F 15/18

(54) **Durchflussmesser für ein Haushaltsgerät, insbesondere eine Geschirrspülmaschine**
Flowmeter for a domestic appliance, in particular a dishwasher
Débitmètre pour un appareil ménager, notamment une lave-vaisselle

(30) Priorität: 12.12.2011 DE 102011088204
(43) Veröffentlichungstag der Anmeldung: 19.06.2013
(73) Patentinhaber: BSH Hausgeräte GmbH, 81739 München (DE)
(72) Erfinder: Jerg, Helmut, 89537 Giengen (DE); Oblinger, Anton, 86637 Wertingen (DE)

(56) Entgegenhaltungen:
- EP-A2- 0 392 347
- CN-Y- 2 646 669
- DE-A1- 3 104 134
- DE-A1- 10 008 318
- DE-A1- 19 601 072
- DE-B- 1 246 261

## Beschreibung

Die vorliegende Erfindung betrifft ein Haushaltsgerät, insbesondere eine Geschirrspülmaschine. Ferner betrifft die vorliegende Erfindung ein Verfahren zum Herstellen eines Haushaltsgeräts.

Geschirrspülmaschinen weisen üblicherweise ein Wasserzulaufsystem auf, welches einen Durchflussmesser umfasst. Der Durchflussmesser erfasst für die automatische Programmsteuerung der Geschirrspülmaschine die Menge an zulaufendem Wasser.

Beispielsweise ist aus der Druckschrift DE 196 01 072 C2 ein Wasserzulaufsystem bekannt, welches zwei Wandschalen und ein Einlegeteil umfasst. Das Einlegeteil bildet zusammen mit einer der Wandschalen eine Kammer aus, in welcher ein Flügelrad für eine Durchflussmessung drehbar gelagert angeordnet ist. Das Einlegeteil wird als Separatteil gefertigt und in eine der Wandschalen zum Bilden der Kammer eingepresst.

Die DE 1 246 261 B gibt ein Durchflussmengenmessgerät mit einem Laufrad an, das in einem Gehäuse mit einem Kanal angeordnet ist, der eine schraubenförmige Schleife mit im Wesentlichen gleichbleibenden Krümmungsradius bildet. Die Flüssigkeitszuleitung und die Flüssigkeitsableitung des Durchflussmengenmessgeräts befinden sich auf verschiedenen Seiten der Ebene, in der sich das Laufrad dreht. Aufgrund des schraubenförmigen Kanals ist die Längsachse der Welle des Laufrads zur Strömungsrichtung des fließenden Wassers gekippt.

Die DE 100 08 318 A1 beschäftigt sich mit einem wasserführenden Haushaltsgerät mit einem Entleerungssystem für die Entleerung einer Arbeitsflüssigkeit aus einem Arbeitsbehälter und einem Flügelradzähler zur Überwachung des Entleerungsvorganges. Von dem Flügelradzähler ist zusätzlich die dem Arbeitsbehälter zugeführte Frischwassermenge erfassbar.

Eine Aufgabe der vorliegenden Erfindung ist es, ein verbessertes Haushaltsgerät sowie ein verbessertes Verfahren zum Herstellen eines solchen Haushaltsgerätes bereitzustellen. Insbesondere soll dabei die Anzahl der erforderlichen Bauteile reduziert und eine Montage des Haushaltsgeräts vereinfacht werden.

Daher wird ein Haushaltsgerät, insbesondere eine Geschirrspülmaschine, mit einem Flügelrad zur Durchflussmessung, zwei Schalen und einem Einlass- und Auslasskanal vorgeschlagen. Die beiden Schalen bilden gemeinsam eine Kammer, in welcher das Flügelrad direkt aufgenommen ist. Der Ein- und Auslasskanal sind jeweils mit der Kammer fluidleitend verbunden. Der Einlass- und/oder Auslasskanal weist einen ersten Abschnitt auf, dessen Querschnittswandung von beiden Schalen gebildet ist. Weiterhin weist der Einlass- und/oder Auslasskanal einen zweiten Abschnitt auf, dessen Querschnittswandung von nur einer der beiden Schalen gebildet ist.

Beispielsweise kann nur der Einlasskanal den ersten und zweiten Abschnitt aufweisen. Genauso gut kann nur der Auslasskanal den ersten und zweiten Abschnitt aufweisen. Weiterhin kann der Einlasskanal den ersten Abschnitt und der Auslasskanal den zweiten Abschnitt aufweisen, und umgekehrt. Bevorzugt jedoch weisen der Einlass- und Auslasskanal jeweils den ersten und zweiten Abschnitt auf.

Dass das Flügelrad in der Kammer "direkt" aufgenommen ist, heißt, dass die Kammer von der ersten und zweiten Schale selbst begrenzt wird, ohne dass weitere Bauteile, beispielsweise ein Einlegeteil, dazwischen angeordnet wären.

Die Querschnittsgeometrie des Einlass- und Auslasskanals ist entscheidend für die Genauigkeit der Durchflussmessung, welche mittels des Flügelrads erfolgt. Dadurch, dass der zweite Abschnitt eine Querschnittswandung aufweist, die nur von einer der beiden Schalen gebildet ist, unterliegt die Querschnittsgeometrie des zweiten Abschnitts keinen Fügetoleranzen, wie dies bei dem ersten Abschnitt der Fall ist, da dessen Querschnittswandung durch die beiden Schalen gebildet ist. Somit wird mittels des zweiten Abschnitts eine hohe Genauigkeit bei der Durchflussmessung sichergestellt. Anders gesagt bildet die Querschnittswandung des zweiten Abschnitts eine definierte Durchflussquerschnittsgeometrie aus und ist einstückiger Bestandteil einer der beiden Schalen. Vorteilhaft bei der vorgeschlagenen Lösung ist weiterhin, dass ein separates Einlegeteil, wie aus dem Stand der Technik bekannt, nicht benötigt wird. Somit entfällt der Herstellungs- und Montageaufwand für ein solches Einlegeteil.

Die Querschnittswandung des ersten Abschnitts und die Querschnittswandung des zweiten Abschnitts sind jeweils in Umfangsrichtung geschlossen ausgebildet, so dass sich ein geschlossener Strömungsquerschnitt ergibt.

Erfindungsgemäß ist eine Strömungsrichtung von durch einen Durchflussquerschnitt der Querschnittswandung fließenden Wassers senkrecht zu einer Längsachse einer Welle des Flügelrads orientiert.

Gemäß einer Ausführungsform ist die den zweiten Abschnitt aufweisende Schale im Spritzgussverfahren hergestellt.

Auch die andere Schale kann im Spritzgussverfahren hergestellt sein. Dadurch ergibt sich eine einfache Herstellbarkeit der Schalen. Zumindest die den zweiten Abschnitt aufweisende Schale kann aus Kunststoff hergestellt sein. Auch die andere Schale kann aus Kunststoff hergestellt sein. Allerdings kommen insbesondere für die andere Schale, die den zweiten Abschnitt nicht aufweist, andere Materialien, wie beispielsweise Metallblech, in Frage.

Gemäß einer weiteren Ausführungsform ist der zweite Abschnitt mittels eines Entformungsschiebers hergestellt.

Der Entformungsschieber wird beim Spritzgießen umspritzt. Nach Abschluss des Spritzgießens wird der Entformungsschieber aus dem gebildeten zweiten Abschnitt herausgezogen, wobei die dann zurückbleibende Öffnung in dem zweiten Abschnitt die gewünschte, genau definierte Querschnittsgeometrie aufweist. Diese Öffnung wird von der Querschnittswandung des zweiten Abschnitts begrenzt.

Gemäß einer weiteren Ausführungsform umfasst die Querschnittswandung des ersten Abschnitts einen Wandungsabschnitt der einen Schale und einen Wandungsabschnitt der anderen Schale, wobei die Wandungsabschnitte fluiddicht miteinander verschweißt sind.

Das Verschweißen kann in einer entsprechenden Schweißvorrichtung unter Zufuhr von Druck und Wärme erfolgen. Der Schweißvorgang kann derart vorgesehen sein, dass die Schalen jeweils in eine Hälfte der Schweißvorrichtung eingelegt werden, woraufhin die Schweißvorrichtung zusammengefahren wird. Auch ein Verschweißen mittels Ultraschall ist denkbar.

Gemäß einer weiteren Ausgestaltung ist das Flügelrad nur in einer der beiden Schalen gelagert.

Somit ist die Lagerung des Flügelrads unabhängig von Fügetoleranzen, welche sich beim Zusammenfügen der beiden Schalen ergeben.

Gemäß einer Ausführungsform weist eine der Schalen eine Auskragung auf, in welcher eine Welle des Flügelrads gelagert ist.

Dadurch kann die entsprechende Welle des Flügelrads über einen vergleichsweise langen Abschnitt derselben gehalten werden. Somit kann ein Rundlauf des Flügelrads verbessert werden.

Gemäß einer Ausführungsform weist die Welle ein freies Ende auf, welches in der Auskragung gelagert ist. An ihrem anderen Ende trägt die Welle Flügel des Flügelrads. Dadurch ergibt sich eine Lagerung der Welle von nur einer Seite. Dadurch wird die Lagerung des Flügelrads an nur einer Schale einfach möglich.

Gemäß einer weiteren Ausführungsform definieren die Flügel zusammen mit der Welle einen Ringraum, in welchen sich die Auskragung erstreckt.

Dadurch sind die Flügel in axialer Richtung, also in Längsrichtung der Welle betrachtet, über der Welle angeordnet, was den Rundlauf des Flügelrads weiter begünstigt.

Gemäß einer weiteren Ausführungsform erstrecken sich die Flügel von dem anderen Ende der Welle axial ausschließlich in Richtung des freien Endes der Welle.

Auch dies dient dazu, dass die Flügel des Flügelrads in axialer Richtung im Wesentlichen über dem Abschnitt der Welle angeordnet sind, welcher in der Auskragung gelagert ist. Dies begünstigt den Rundlauf noch weiter.

Gemäß einer weiteren Ausführungsform bildet eine der Schalen einen Topf aus, welcher an seinem Rand mit der anderen Schale verschweißt ist, um die Kammer zu bilden.

Dieses Verschweißen kann in ein und demselben Schweißvorgang geschehen, in welchem auch der erste Abschnitt gebildet wird. Auch die andere Schale kann einen Topf aufweisen, welcher dem anderen Topf gegenüberliegt. In diesem Fall bilden die beiden Töpfe die Kammer gemeinsam aus.

Gemäß einer weiteren Ausführungsform umfasst die Kammer einen Topf, an dessen Boden das Flügelrad gelagert ist.

Dadurch kann das Flügelrad einfach angebracht werden.

Gemäß einer weiteren Ausführungsform ist die Auskragung an dem Boden des Topfes ausgebildet, insbesondere einstückig angeformt.

Eine solche Auskragung lässt sich einfach herstellen.

Gemäß einer weiteren Ausführungsform sind der Einlass- und Auslasskanal Bestandteil eines Wassereinlaufsystems des Haushaltsgeräts.

Das Wassereinlaufsystem, welches üblicherweise bei einer Geschirrspülmaschine vorgesehen ist, kann weiterhin eine Luftstrecke aufweisen.

Bei dem Haushaltsgerät handelt es sich bevorzugt um ein wasserführendes Haushaltsgerät, insbesondere eine Geschirrspülmaschine oder eine Waschmaschine.

Weiterhin wird ein Verfahren zum Herstellen des erfindungsgemäßen Haushaltsgeräts vorgeschlagen, wobei die den zweiten Abschnitt aufweisende Schale im Spritzgussverfahren und der zweite Abschnitt mittels eines Entformungsschiebers hergestellt werden.

Vorzugsweise wird zunächst die Schale mit dem zweiten Abschnitt im Spritzgussverfahren unter Verwendung eines Entformungsschiebers hergestellt. Hiernach wird die Schale entformt, wobei der Entformungsschieber aus dem zweiten Abschnitt herausgezogen wird. Daraufhin wird die den zweiten Abschnitt aufweisende Schale mit einer vorzugsweise ebenfalls im Spritzgussverfahren hergestellten weiteren Schale gefügt. Bei diesem Fügevorgang wird der erste Abschnitt erzeugt. Das Fügen umfasst bevorzugt ein Verschweißen der beiden Schalen miteinander. In dem Fügevorgang wird bevorzugt nicht nur der zweite Abschnitt, sondern auch die Kammer erzeugt.

Gemäß einer Ausführungsform umfasst die Querschnittswandung des ersten Abschnitts einen Wandungsabschnitt der einen Schale und einen Wandungsabschnitt der anderen Schale, wobei die Wandungsabschnitte fluiddicht miteinander verschweißt werden.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Es zeigen:
Fig. 1: einen Ausschnitt aus einem Haushaltsgerät gemäß einer Ausführungsform;
Fig. 2: einen Schnitt II-II aus Fig. 1; und
Fig. 3: einen Schnitt durch eine Spritzgussvorrichtung zum Herstellen einer Schale des Haushaltsgeräts aus Fig. 1.

In den Figuren sind gleiche oder funktionsgleiche Elemente mit den gleichen Bezugszeichen bezeichnet, sofern nichts anderes angegeben ist.

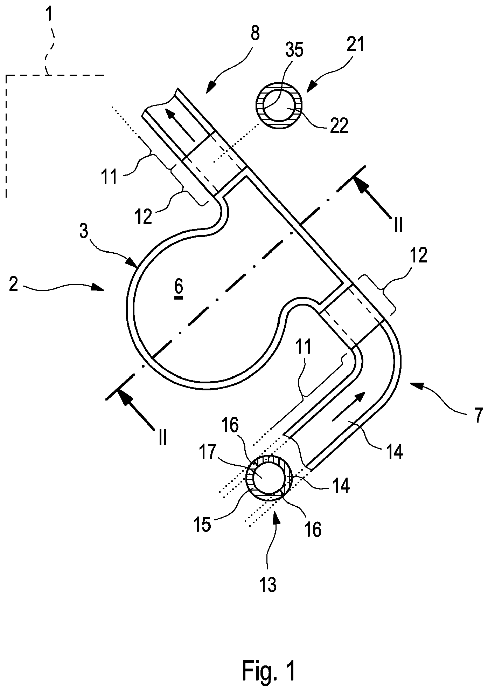

Fig. 1 zeigt einen Ausschnitt aus einem schematisch angedeuteten Haushaltsgerät 1. Das Haushaltsgerät 1 ist beispielsweise als Geschirrspülmaschine ausgebildet.

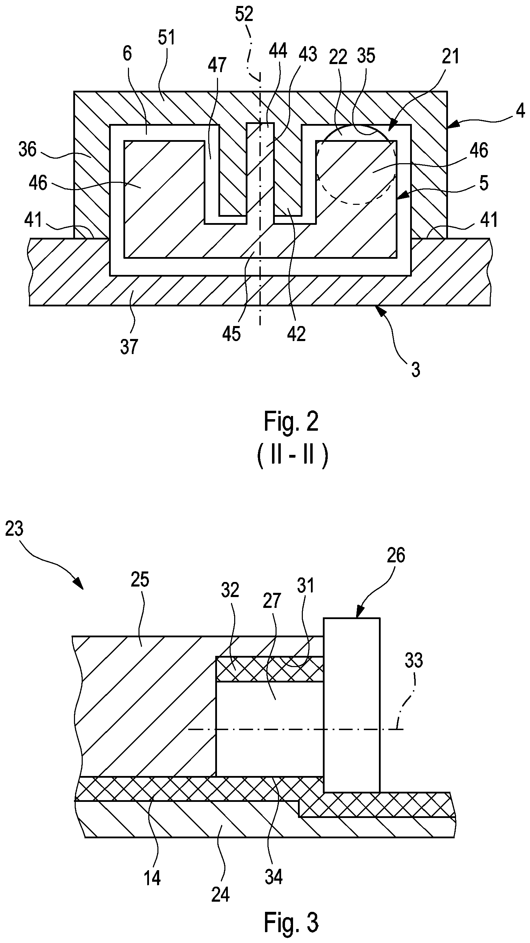

Das Haushaltsgerät 1 umfasst ein Wassereinleitungssystem 2. Das Wassereinleitungssystem 2 weist eine erste Schale 3 und eine zweite Schale 4 auf, siehe Fig. 2. Fig. 2 zeigt dabei einen Schnitt II-II aus Fig. 1. Nun zurückkehrend zu Fig. 1, ist dort lediglich die erste Schale 3 gezeigt. Die zweite Schale 4 ist abgenommen.

Das Wassereinleitungssystem 2 weist ein in Fig. 2 gezeigtes Flügelrad 5 auf. Das Flügelrad 5 dient zur Erfassung der Menge des durch das Wassereinleitungssystem 2 strömenden Wassers. Das Flügelrad 5 kann nicht dargestellte Magnete aufweisen, welche mit einer Spule derart zusammenwirken, dass eine Umdrehungszahl des Flügelrads 5 erfasst wird. Die Drehzahl wird einer Steuereinrichtung des Haushaltsgeräts 1 zur Verfügung gestellt, um beispielsweise einen Spülvorgang zu steuern.

Die erste und zweite Schale 3, 4 bilden zusammen eine Kammer 6 aus, in welcher das Flügelrad 5 direkt aufgenommen ist. "Direkt" heißt, dass die von dem Wasser durchströmte Kammer 6 von der ersten und zweiten Schale 3, 4 selbst begrenzt wird, ohne dass weitere Bauteile, beispielsweise ein Einlegeteil, dazwischen angeordnet wären.

Das Wassereinleitungssystem 2 weist weiterhin einen Einlasskanal 7 und einen Auslasskanal 8 auf. Eine Strömungsrichtung des Wassers ist mit Pfeilen angedeutet.

Der Einlass- und Auslasskanal 7, 8 weisen jeweils einen ersten Abschnitt 11 und einen zweiten Abschnitt 12 auf.

Eine Querschnittswandung 13 des ersten Abschnitts 11 ist in Fig. 1 in ausgebrochener Darstellung gezeigt. Die Querschnittswandung 13 umfasst einen Wandungsabschnitt 14 der ersten Schale 3 und einen zweiten Wandungsabschnitt 15 der zweiten Schale 4. Gemäß dem Ausführungsbeispiel sind der erste und zweite Wandungsabschnitt 14, 15 jeweils als Halbschalen ausgeführt. Die Wandungsabschnitte 14, 15 sind in ihren Randbereichen 16 miteinander verschweißt und bilden somit einen geschlossenen Durchflussquerschnitt 17, durch welchen das Wasser strömt.

Weiterhin zeigt Fig. 1 in ausgebrochener Darstellung eine Querschnittswandung 21 des zweiten Abschnitts 12. Die Querschnittswandung 21 wird nur von der ersten Schale 3 ausgebildet und ist daher einstückiger Bestandteil derselben. Die Querschnittswandung 21 definiert in ihrem Inneren einen geschlossenen Durchflussquerschnitt 22.

Das Wassereinleitungssystem 2 wird beispielsweise wie folgt hergestellt:
Die Schalen 3 und 4 werden separat im Spritzgussverfahren, beispielsweise aus Kunststoff, hergestellt. Zur Herstellung der ersten Schale 3 wird beispielsweise eine in Fig. 3 im Schnitt und ausschnittsweise gezeigte Spritzgussvorrichtung 23 verwendet. Die Spritzgussvorrichtung 23 umfasst ein unteres Werkzeug 24 und ein oberes Werkzeug 25. Außerdem weist die Spritzgussvorrichtung 23 einen Entformungsschieber 26 auf. Der Entformungsschieber weist beispielsweise einen kreiszylindrischen Abschnitt 27 auf. Der Abschnitt 27 bildet zusammen mit dem oberen Werkzeug 25 eine Kavität 31. Die Kavität 31 weist in einem Schnitt senkrecht zur Papierebene gesehen die Form eines Rings mit einem kreiszylindrischem Innen- und Außenumfang auf. Damit entspricht die Form der Kavität der Form der in Fig. 1 gezeigten Querschnittswandung 21. Wird nun Kunststoff 32 in die Kavität 31 gespritzt, so ergibt sich nach Erkalten des Kunststoffs 32 und Herausziehen des Entformungsschiebers 26 entlang der Längsachse 33 des Abschnitts 27 die Querschnittswandung 21 mit dem Durchflussquerschnitt 22. Der Durchflussquerschnitt 22 weist dann den durch den Außenumfang 34 des Entformungsschiebers 26 exakt vorgegebenen Innenumfang 35 auf.

Außerdem wird im Zuge des Spritzgießens der erste Wandungsabschnitt 14 der ersten Schale 3 zwischen dem unteren und oberen Werkzeug 24, 25 erzeugt.

Nach Herstellung der Schalen 3, 4 werden diese zusammengefügt, wobei die ersten und zweiten Wandungsabschnitte 14, 15 miteinander verschweißt werden. Darüber hinaus kann in diesem Zuge ein Topf 36 der zweiten Schale 4 mit einem Topf 37 der ersten Schale 3 im Bereich jeweils umlaufender Ränder 41 verschweißt werden.

Vor dem Fügen der Schalen 3, 4 wird das Flügelrad 5 an der zweiten Schale 4 drehbar gelagert angebracht. Dazu kann der Topf 36 der ersten Schale 4 mit einer Auskragung 42 einstückig gebildet sein. In der Auskragung 42 ist eine Welle 43 an ihrem freien Ende 44 drehbar gelagert aufgenommen. An dem anderen Ende 45 der Welle 43 sind mehrere Flügel 46 ausgebildet, welche sich in Bezug auf die Welle 43 radial zu dieser erstrecken. Die Flügel 46 erstrecken sich von dem anderen Ende 45 der Welle 43 in Richtung des freien Endes 44. Damit ergibt sich ein Ringraum 47, in welchen sich die Auskragung 42 erstreckt. Die Auskragung 42 erstreckt sich dabei senkrecht zu einem Boden 51 des Topfs 36.

Hinter einem Flügel 46 des Flügelrads 5 ist in Fig. 2 der geschlossene Durchflussquerschnitt 22 zu erkennen. Damit ergibt sich eine Strömungsrichtung für das Wasser senkrecht zur Längsachse 52 der Welle 43. Gemäß einer nicht zur Erfindung gehörenden, anderen Ausführungsform könnte das Flügelrad 5 auch derart angeordnet sein, dass eine Strömungsrichtung des Wassers co-linear mit der Längsachse 52 der Welle 43 angeordnet ist.

### Verwendete Bezugszeichen:

- 1: Haushaltsgerät
- 2: Wassereinleitungssystem
- 3: erste Schale
- 4: zweite Schale
- 5: Flügelrad
- 6: Kammer
- 7: Einlasskanal
- 8: Auslasskanal
- 11: erster Abschnitt
- 12: zweiter Abschnitt
- 13: Querschnittswand
- 14: erster Wandungsabschnitt
- 15: zweiter Wandungsabschnitt
- 16: Randbereich
- 17: Durchflussquerschnitt
- 21: Querschnittswandung
- 22: Durchflussquerschnitt
- 23: Spritzgussvorrichtung
- 24: unteres Werkzeug
- 25: oberes Werkzeug
- 26: Entformungsschieber
- 27: Abschnitt
- 31: Kavität
- 32: Kunststoff
- 33: Längsachse
- 34: Außenumfang
- 35: Innenumfang
- 36: Topf
- 37: Topf
- 41: Rand
- 42: Auskragung
- 43: Welle
- 44: Ende
- 45: Ende
- 46: Flügel
- 47: Ringraum
- 51: Boden
- 52: Längsachse

## Patentansprüche

1. Haushaltsgerät (1), insbesondere Geschirrspülmaschine, mit
- einem Flügelrad (5) zur Durchflussmessung, wobei das Flügelrad (5) eine sich entlang einer Längsachse (52) erstreckende Welle (43) umfasst,
- zwei Schalen (3, 4), welche gemeinsam eine Kammer (6) bilden, in der das Flügelrad (5) direkt aufgenommen ist, und
- einem Einlass- und Auslasskanal (7, 8), welche jeweils mit der Kammer (6) fluidleitend verbunden sind, wobei der Einlass- und/oder Auslasskanal (7, 8)
- einen ersten Abschnitt (11), dessen Querschnittswandung (13) von beiden Schalen (3, 4) gebildet ist, und
- einen zweiten Abschnitt (12) aufweist, dessen Querschnittswandung (21) von nur einer der beiden Schalen (3, 4) gebildet ist,
- wobei die Querschnittswandung (13) des ersten Abschnitts (11) und die Querschnittswandung (21) des zweiten Abschnitts (12) jeweils in Umfangsrichtung geschlossen ausgebildet sind, so dass sich ein geschlossener Strömungsquerschnitt (17) ergibt, und
- wobei eine Strömungsrichtung von durch einen Durchflussquerschnitt (22) der Querschnittswandung (21) fließenden Wassers senkrecht zur Längsachse (52) der Welle (43) des Flügelrads (5) orientiert ist.

2. Haushaltsgerät nach Anspruch 1, **dadurch gekennzeichnet, dass** die den zweiten Abschnitt (12) aufweisende Schale (3) im Spritzgussverfahren hergestellt ist.

3. Haushaltsgerät nach Anspruch 2, **dadurch gekennzeichnet, dass** der zweite Abschnitt (12) mittels eines Entformungsschiebers (26) hergestellt ist.

4. Haushaltsgerät nach einem der Ansprüche 1 - 3, **dadurch gekennzeichnet, dass** die Querschnittswandung (13) des ersten Abschnitts (11) einen Wandungsabschnitt (14) der einen Schale (3) und einen Wandungsabschnitt (15) der anderen Schale (4) umfasst, wobei die Wandungsabschnitte (14, 15) fluiddicht miteinander verschweißt sind.

5. Haushaltsgerät nach einem der Ansprüche 1 - 4, **dadurch gekennzeichnet, dass** das Flügelrad (5) nur in einer der beiden Schalen (3, 4) gelagert ist.

6. Haushaltsgerät nach Anspruch 5, **dadurch gekennzeichnet, dass** eine der Schalen (3, 4) eine Auskragung (42) aufweist, in welcher eine Welle (43) des Flügelrads (5) gelagert ist.

7. Haushaltsgerät nach Anspruch 6, **dadurch gekennzeichnet, dass** die Welle (43) ein freies Ende (44) aufweist, welches in der Auskragung (42) gelagert ist, und dass die Welle (43) an ihrem anderen Ende (45) Flügel (46) des Flügelrads (5) trägt.

8. Haushaltsgerät nach Anspruch 7, **dadurch gekennzeichnet, dass** die Flügel (46) zusammen mit der Welle (43) einen Ringraum (47) definieren, in welchen sich die Auskragung (42) erstreckt.

9. Haushaltsgerät nach Anspruch 7 oder 8, **dadurch gekennzeichnet, dass** sich die Flügel (46) von dem anderen Ende (45) der Welle (43) axial ausschließlich in Richtung des freien Endes (44) der Welle (43) erstrecken.

10. Haushaltsgerät nach einem der Ansprüche 1 - 9, **dadurch gekennzeichnet, dass** eine der Schalen (3, 4) einen Topf (36, 37) ausbildet, welcher an seinem Rand (41) mit der anderen Schalen (3, 4) verschweißt ist, um die Kammer (6) zu bilden.

11. Haushaltsgerät nach einem der Ansprüche 5 - 10, **dadurch gekennzeichnet, dass** die Kammer (6) einen Topf (36) umfasst, an dessen Boden (51) das Flügelrad (5) gelagert ist.

12. Haushaltsgerät nach Anspruch 11, **dadurch gekennzeichnet, dass** die Auskragung (42) an dem Boden (51) des Topfes (36) ausgebildet ist.

13. Haushaltsgerät nach einem der Ansprüche 1 - 11, **dadurch gekennzeichnet, dass** der Einlass- und Auslasskanal (7, 8) Bestandteil eines Wassereinlaufsystems (2) des Haushaltsgeräts (1) sind.

14. Verfahren zum Herstellen der Schalen (3, 4) des Haushaltsgeräts (1) nach einem der Ansprüche 1 - 13, wobei die den zweiten Abschnitt (12) aufweisende Schale (3) im Spritzgussverfahren und der zweite Abschnitt (12) mittels eines Entformungsschiebers (26) hergestellt werden.

15. Verfahren nach Anspruch 14, **dadurch gekennzeichnet, dass** die Querschnittswandung (13) des ersten Abschnitts (11) einen Wandungsabschnitt (14) der einen Schale (3) und einen Wandungsabschnitt (15) der anderen Schale (4) umfasst, wobei die Wandungsabschnitte (14, 15) fluiddicht miteinander verschweißt werden.

## Claims

1. Household appliance (1), in particular dishwasher, with
- an impeller wheel (5) for flow measurement, wherein the impeller wheel (5) comprises a shaft (43) which extends along a longitudinal axis (52),
- two shells (3, 4), which together form a chamber (6), in which the impeller wheel (5) is directly accommodated, and
- an inlet and outlet duct (7, 8), which are each connected to the chamber (6) in a fluid-conducting manner, wherein the inlet and/or outlet duct (7, 8)
- has/have a first section (11), the cross-section wall (13) of which is formed by two shells (3, 4) and
- a second section (12), the cross-section wall (21) of which is formed by only one of the two shells (3, 4),
- wherein the cross-section wall (13) of the first section (11) and the cross-section wall (21) of the second section (12) are each embodied in the peripheral direction, so that a closed flow cross-section (17) results, and
- wherein a flow direction of water flowing through a flow cross-section (22) of the cross-section wall (21) is oriented perpendicularly to the longitudinal axis (52) of the shaft (43) of the impeller wheel (5).

2. Household appliance according to claim 1, **characterised in that** the shell (3) having the second section (12) is produced in an injection moulding procedure.

3. Household appliance according to claim 2, **characterised in that** the second section (12) is produced by means of a deforming slider (26).

4. Household appliance according to one of claims 1 - 3, **characterised in that** the cross-section wall (13) of the first section (11) comprises a wall section (14) of the one shell (3) and a wall section (15) of the other shell (4), wherein the wall sections (14, 15) are welded to one another in a fluid-tight manner.

5. Household appliance according to one of claims 1 - 4, **characterised in that** the impeller wheel (5) is only mounted in one of the two shells (3, 4).

6. Household appliance according to claim 5, **characterised in that** one of the shells (3, 4) has an overhang (42), in which a shaft (43) of the impeller wheel (5) is mounted.

7. Household appliance according to claim 6, **characterised in that** the shaft (43) has a free end (44), which is mounted in the overhang (42), and that the shaft (43) has blades (46) of the impeller wheel (5) at its other end (45).

8. Household appliance according to claim 7, **characterised in that** the blades (46), together with the shaft (43), form an annual space (47) into which the overhang (42) extends.

9. Household appliance according to claim 7 or 8, **characterised in that** the blades (46) extend axially from the other end (45) of the shaft (43) exclusively in the direction of the free end (44) of the shaft (43).

10. Household appliance according to one of claims 1 - 9, **characterised in that** one of the shells (3, 4) forms a pot (36, 37), which is welded at its edge (41) to the other shell (3, 4) in order to form the chamber (6).

11. Household appliance according to one of claims 5 - 10, **characterised in that** the chamber (6) comprises a pot (36), at the bottom (51) of which the impeller wheel (5) is mounted.

12. Household appliance according to claim 11, **characterised in that** the overhang (42) is embodied at the bottom (51) of the pot (36).

13. Household appliance according to one of claims 1 - 11, **characterised in that** the inlet and outlet duct (7, 8) are constituent parts of a water inlet system (2) of the household appliance (1).

14. Method for producing the shells (3, 4) of the household appliance (1) according to one of claims 1 - 13, wherein the shell (3) having the second section (12) has been produced in an injection moulding procedure and the second section (12) has been produced by means of a deforming slider (26).

15. Method according to claim 14, **characterised in that** the cross-section wall (13) of the first section (11) comprises a wall section (14) of the one shell (3) and a wall section (15) of the other shell (4), wherein the wall sections (14, 15) are welded to one another in a fluid-tight manner.

## Revendications

1. Appareil ménager (1), en particulier lave-vaisselle, comprenant :
- une turbine (5) de mesure de débit, dans lequel la turbine (5) comprend un arbre s'étendant le long d'un axe longitudinal (52),
- deux coques (3, 4) qui forment ensemble une chambre (6) dans laquelle la turbine (5) est directement logée, et
- un conduit d'entrée et de sortie (7, 8) qui sont connectés chacun fluidiquement à la chambre (6), dans lequel le conduit d'entrée et/ou de sortie (7, 8) comprennent :
- une première partie (11) dont la paroi de section transversale (13) est formée par les deux coques (3, 4), et
- une seconde partie (12), dont la paroi de section transversale (21) est formée par seulement une des deux coques (3, 4),
dans lequel la paroi de section transversale (13) de la première partie (11) et la paroi de section transversale (21) de la seconde partie (12) sont configurées respectivement de façon à être fermées en direction périphérique, de manière à obtenir une section d'écoulement (17) fermée, et
dans lequel une direction d'écoulement d'eau s'écoulant par une section d'écoulement (22) de la paroi de section transversale (21) est orientée perpendiculairement à l'axe longitudinal (52) de l'arbre (43) de la turbine (5).

2. Appareil ménager selon la revendication 1, **caractérisé en ce que** la coque (3) englobant la seconde partie (12) est fabriquée par moulage par injection.

3. Appareil ménager selon la revendication 2, **caractérisé en ce que** la seconde partie (12) est fabriquée au moyen d'un tiroir de démoulage (26).

4. Appareil ménager selon l'une des revendications 1 à 3, **caractérisé en ce que** la paroi de section transversale (13) de la première partie (11) comprend une partie de paroi (14) d'une coque (3) et une partie de paroi (15) de l'autre coque (4), dans lequel les parties de paroi (14,15) sont soudées l'une à l'autre de manière étanche aux fluides.

5. Appareil ménager selon l'une des revendications 1 à 4, **caractérisé en ce que** la turbine (5) est montée dans une seule des deux coques (3, 4).

6. Appareil ménager selon la revendication 5, **caractérisé en ce qu'**une des coques (3, 4) comprend une saillie (42), dans laquelle un arbre (43) de la turbine (5) est monté.

7. Appareil ménager selon la revendication 6, **caractérisé en ce que** l'arbre (43) possède une extrémité libre (44) qui est montée dans la saillie (42) et **en ce que** l'arbre (43) porte à son autre extrémité (45) des pales (46) de la turbine (5).

8. Appareil ménager selon la revendication 7, **caractérisé en ce que** les pales (46) définissent avec l'arbre (43) un espace annulaire (47) dans lequel la saillie (42) s'étend.

9. Appareil ménager selon la revendication 7 ou 8, **caractérisé en ce que** les pales (46) s'étendent à partir de l'autre extrémité (45) de l'arbre (43) axialement exclusivement en direction de l'extrémité libre (44) de l'arbre (43).

10. Appareil ménager selon l'une des revendications 1 à 9, **caractérisé en ce qu'**une des coques (3, 4) forme un creuset (36, 37) qui est soudé sur son bord (41) à l'autre coque (3, 4) pour former la chambre (6).

11. Appareil ménager selon l'une des revendications 5 à 10, **caractérisé en ce que** la chambre (6) comprend un creuset (36) dans le fond (51) duquel la turbine (5) est montée.

12. Appareil ménager selon la revendication 11, **caractérisé en ce que** la saillie (42) est formée au fond (51) du creuset (36).

13. Appareil ménager selon l'une des revendications 1 à 11, **caractérisé en ce que** le conduit d'entrée et de sortie (7, 8) sont une partie constituante d'un système d'arrivée d'eau (2) de l'appareil ménager (1).

14. Procédé de fabrication des coques (3, 4) de l'appareil ménager (1) selon l'une des revendications 1 à 13, dans lequel la coque (3) englobant la seconde partie (12) est fabriquée par moulage par injection et la seconde partie (12) est fabriquée au moyen d'un tiroir de démoulage (26).

15. Procédé selon la revendication 14, **caractérisé en ce que** la paroi de section transversale (13) de la première partie (11) comprend une partie de paroi (14) d'une coque (3) et une partie de paroi (15) de l'autre coque (4), dans lequel les parties de paroi (14, 15) sont soudées l'une à l'autre de manière étanche aux fluides.
